# EUROPEAN PATENT SPECIFICATION

(11) **EP 4 354 594 B1**
(45) Date of publication and mention of the grant of the patent: **04.11.2026**
(21) Application number: 22911951.6
(22) Date of filing: 21.12.2022
(51) Int. Cl.: H01M 10/655, H01M 10/613, H01M 10/625, H01M 10/647, H01M 10/653, H01M 10/6551, H01M 10/6554, H01M 10/6555, H01M 10/6567, H01M 50/204, H01M 50/209, H01M 50/211, H01M 50/227, H01M 50/249

(54) **METHOD FOR MANUFACTURING A BATTERY MODULE**
VERFAHREN ZUR HERSTELLUNG EINES BATTERIEMODULS
PROCÉDÉ DE FABRICATION D'UN MODULE DE BATTERIE

(30) Priority: 24.12.2021 KR 20210187838
(43) Date of publication of application: 17.04.2024
(73) Proprietor: LG Energy Solution, Ltd., Seoul 07335 (KR)
(72) Inventor: KIM, Seung-Joon, Daejeon 34122 (KR); CHI, Ho-June, Daejeon 34122 (KR); KIM, Kyung-Woo, Daejeon 34122 (KR); SHIN, Eun-Gyu, Daejeon 34122 (KR)
(74) Representative: Plasseraud IP
(86) International application number: PCT/KR2022/021003
(87) International publication number: WO 2023/121318

(56) References cited:
- EP-A1- 3 264 492
- JP-A- 2015 185 535
- JP-A- 2018 510 463
- JP-A- 2020 057 507
- JP-A- 2020 057 507
- KR-A- 20200 004 202
- KR-A- 20200 078 450
- US-A1- 2020 388 891

## Description

### TECHNICAL FIELD

The present disclosure relates to a method for manufacturing a battery module.

The present application claims priority to Korean Patent Application No. 10-2021-0187838 filed on December 24, 2021.

### BACKGROUND ART

Secondary batteries, which have high applicability according to product groups and electrical characteristics such as high energy density, are commonly applied not only to portable devices but also to electric vehicles (EVs), hybrid electric vehicles (HEVs), or the like driven by electric power sources. Since such secondary batteries have not only a primary advantage of dramatically reducing the use of fossil fuels, but also an advantage of no by-products generated from the use of energy, they are attracting attention as a new energy source to improve eco-friendliness and energy efficiency.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, a conventional battery pack includes a plurality of battery cells, and at this time, there is a case in which a liquid heat dissipation resin is applied to cool irregular shapes of the plurality of battery cells. However, in this case, there is a problem that a liquid resin is difficult to handle and it takes a long time to harden.

On the other hand, in a conventional battery pack, there is a case in which a solid heat dissipation material is used to cool simple shaped portions. However, the solid heat dissipation material has a problem in that cooling efficiency is lowered because it is difficult to fill the gaps of the irregularly shaped cooling portion.

Therefore, in cooling a battery pack, there is a need to seek a heat dissipation pad that is applicable to cooling of an irregular shape, has a short working time, and is easy to handle.

Document US 2020/388891 A1 discusses a battery module capable of effectively dissipating heat generated in a battery cell. Document JP 2020 057507 A discusses a heat dissipation structure and a battery including the same. Document EP 3 264 492 A1 discusses a battery module. Document KR 2020 0004202 A relates to a battery module.

### DISCLOSURE

### Technical Problem

The present disclosure is designed to solve the problems of the related art, and therefore the present disclosure is directed to smoothly cooling a battery module corresponding to irregular shapes of a plurality of battery cells accommodated inside the battery module in cooling the battery module.

In another aspect, the present disclosure is directed to shortening the working time for applying a heat dissipation material in the manufacturing step of a battery module.

In still another aspect, the present disclosure is directed to facilitating handling when manufacturing a battery module.

### Technical Solution

A method for manufacturing a battery module according to an embodiment of the present invention is as defined in claim 1. The method of the present invention may comprise one or more features of the dependent claims 2 to 12.

### Advantageous Effects

According to the present disclosure, in cooling a battery module, the battery module may be smoothly cooled despite irregular shapes of a plurality of battery cells accommodated inside the battery module.

In another aspect, according to the present disclosure, the working time for applying a heat dissipation material in the manufacturing step of a battery module may be shortened.

In still another aspect, according to the present disclosure, handling may be facilitated when manufacturing a battery module.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery module according to an embodiment of the present disclosure.
FIG. 2 is an exploded perspective view of FIG. 1.
FIG. 3 is a view for describing a battery cell included in the battery module of FIG. 1.
FIG. 4 is a view for describing a heat dissipation pad according to an embodiment of the present disclosure.
FIG. 5 is a view for describing a heat dissipation pad into which liquid resin is injected according to an embodiment of the present disclosure.
FIG. 6 is a view for describing a state before a battery cell is applied to a heat dissipation pad according to an embodiment of the present disclosure.
FIG. 7 is a view for describing a state in which a battery cell is applied to a heat dissipation pad according to an embodiment of the present disclosure.
FIG. 8 is a view for describing a state in which liquid resin flows out after a battery cell is applied to a heat dissipation pad according to an embodiment of the present disclosure.
FIG. 9 is a view for describing a heat dissipation pad according to another embodiment of the present disclosure.
FIG. 10 is a view for describing a heat dissipation pad according to still another embodiment of the present disclosure.
FIG. 11 is a view for describing a manufacturing process of the heat dissipation pad of FIG. 10.
FIG. 12 is a view for describing a heat dissipation pad according to still another embodiment of the present disclosure.
FIG. 13 is a view for describing a battery pack including the battery module of FIG. 1.
FIG. 14 is a view for describing a vehicle including the battery pack of FIG. 13.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In order to help understand the present disclosure, the accompanying drawings are not shown on an actual scale, but the dimensions of some components may be exaggerated.

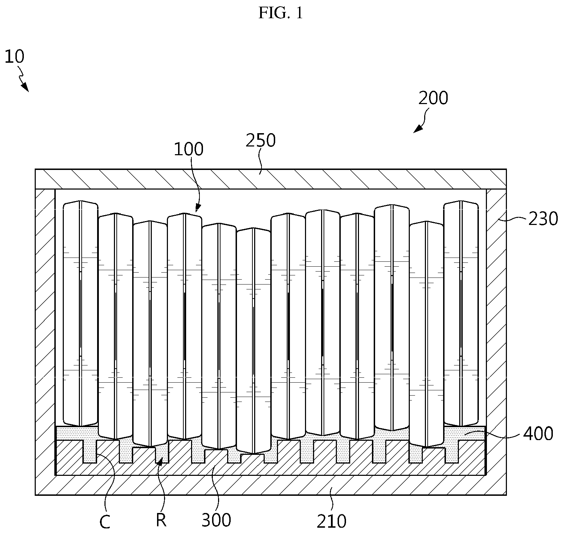

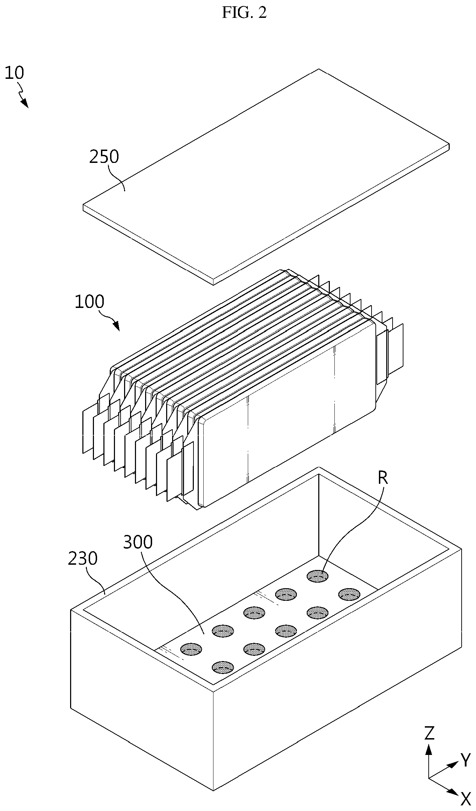

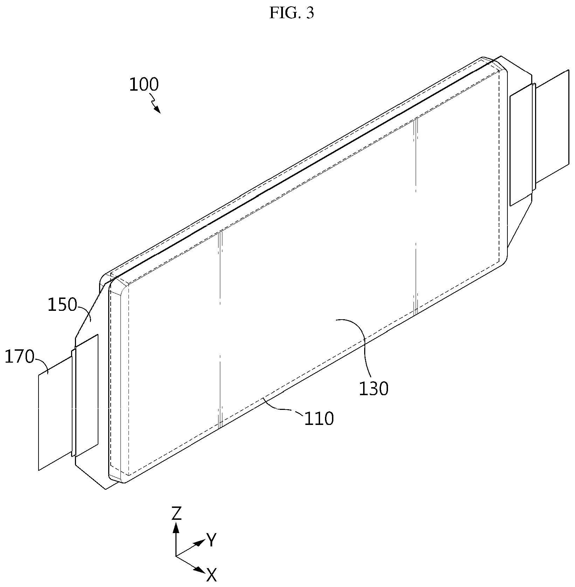

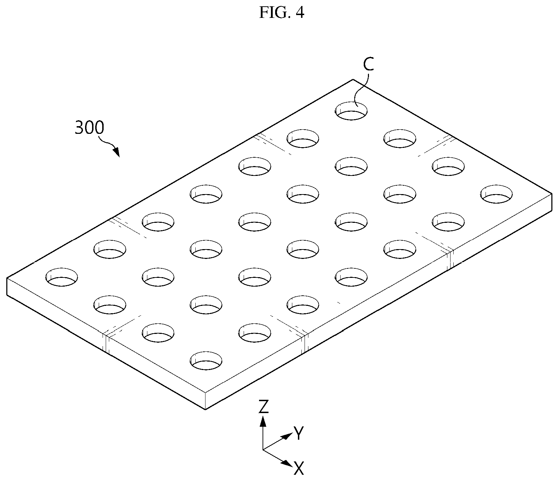

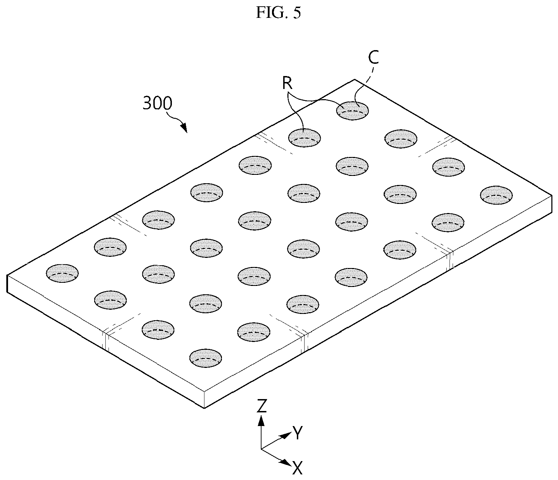

FIG. 1 is a view for describing a battery module according to an embodiment of the present disclosure, and FIG. 2 is an exploded perspective view of FIG. 1. FIG. 3 is a view for describing a battery cell included in the battery module of FIG. 1, FIG. 4 is a view for describing a heat dissipation pad according to an embodiment of the present disclosure, and FIG. 5 is a view for describing a heat dissipation pad into which liquid resin is injected according to an embodiment of the present disclosure.

Referring to FIGS. 1 to 5, a battery module 10 according to the present invention includes a plurality of battery cells 100, a module housing 200, and a heat dissipation pad 300.

Here, the battery cell 100, as a secondary battery, may be provided as a pouch-type secondary battery, a prismatic secondary battery, or a cylindrical secondary battery. Hereinafter, in this embodiment, it will be described that the plurality of battery cells 100, as secondary batteries, are limited to being provided as pouch-type secondary batteries. However, the present disclosure is not limited to the above embodiment only, and it is for sure that a cylindrical secondary battery or a prismatic secondary battery may also be applied to the present disclosure. Meanwhile, as shown in FIG. 1, the plurality of battery cells 100 in one embodiment of the present disclosure may be arranged to be stacked on each other along the width direction of the battery cells 100.

The module housing 200 accommodates a plurality of battery cells 100. The module housing 200 accommodates the heat dissipation pad 300.

The heat dissipation pad 300 is accommodated in the module housing 200 and positioned on at least one side of the plurality of battery cells 100. Referring to FIGS. 4 and 5, at least one concave portion C is provided in the heat dissipation pad 300. A liquid resin R is injected into the concave portion C.

The heat dissipation pad 300 may be in a solid form. Therefore, since the overall shape of the heat dissipation pad 300 is maintained, heat conduction between heat sinks 500 to be described later may be minimized.

Here, the heat dissipation pad 300 may transfer heat generated in the battery cell 100 to the outside. For example, the heat dissipation pad 300 may include a thermal interface material (TIM). The thermal interface material may be, for example, at least one of a heat dissipation grease, a thermally conductive adhesive, and a phase change material. The heat dissipation pad 300 may increase a contact area with the module housing 200 or a heat sink 500 to be described later. Accordingly, thermal conductivity may be improved.

Meanwhile, the liquid resin R may be a thermally conductive liquid resin R. That is, the liquid resin R may transfer heat generated in the battery cell 100 to the outside. The liquid resin R may be interposed between the battery cell 100 and the module housing 200 to fix the battery cell 100 in place.

According to such a structure, since the liquid resin R is injected only in a partial region of the heat dissipation pad 300, the curing time of the liquid resin R may be shortened. For example, if the amount of the liquid resin R is large, it takes a long time to harden, and thus work efficiency may be degraded. However, according to the present disclosure, since the liquid resin R is injected only into at least one concave portion C provided in the heat dissipation pad 300, the amount of the liquid resin R applied to the present disclosure may be maintained relatively small. As a result, the time required for curing is significantly reduced, and thus work efficiency may be improved. Furthermore, handling during the manufacturing operation of the battery module 10 may be facilitated.

Furthermore, according to the above structure, the entire surface of the battery cell 100 may be covered by the liquid resin R in a liquid form. Therefore, a contact area between the battery cell 100 and the liquid resin R or between the battery cell 100 and the heat dissipation pad 300 may be maximized. Accordingly, cooling efficiency may also be maximized. That is, according to the present disclosure, in cooling the battery module 10, it is possible to smoothly cool the battery module 10 despite the irregular shapes of the plurality of battery cells 100 accommodated inside the battery module 10.

Referring to FIG. 1 again, the heat dissipation pad 300 may have an elasticity. For example, the hardness of the heat dissipation pad 300 may be in the range of about 40 to 95 HS in Shore 00 hardness. Shore hardness means the hardness defined by using the rebound height that bounces up after dropping the indenter on the surface of the object. When the hardness of the heat dissipation pad 300 is less than about 40 HS in Shore 00 hardness, it is impossible to process or maintain the shape of the heat dissipation pad 300, which may cause difficulties in use. On the other hand, when the hardness of the heat dissipation pad 300 exceeds about 95 HS in Shore 00 hardness, the heat dissipation pad 300 does not adhere to the variation or shape of the battery cell 100 and maintains only its original shape, and thus application of the present disclosure may be difficult. Therefore, the hardness of the heat dissipation pad 300 may be in the range of about 40 to 95 HS in Shore 00 hardness. Preferably, the hardness of the heat dissipation pad 300 may be in the range of about 50 to 90 HS in Shore 00 hardness. More preferably, the hardness of the heat dissipation pad 300 may be in the range of about 10 to 60 HS in Shore A hardness.

According to the configuration in which the heat dissipation pad 300 has an elasticity force within the hardness range as described above, even if there are irregularities or steps in components of a portion in contact with the heat dissipation pad 300, the heat dissipation pad 300 may be deformed into a shape corresponding to the irregularities or steps. That is, in the present disclosure, the heat dissipation pad 300 may be deformed into a shape corresponding to the stepped shape of the battery cell 100 stack in contact with the heat dissipation pad 300. Accordingly, a contact area between the battery cell 100 and the heat dissipation pad 300 may be maximized. Cooling efficiency may also be maximized. That is, according to the present disclosure, in cooling the battery module 10, the battery module 10 may be smoothly cooled despite the irregular shapes of the plurality of battery cells 100 accommodated inside the battery module 10.

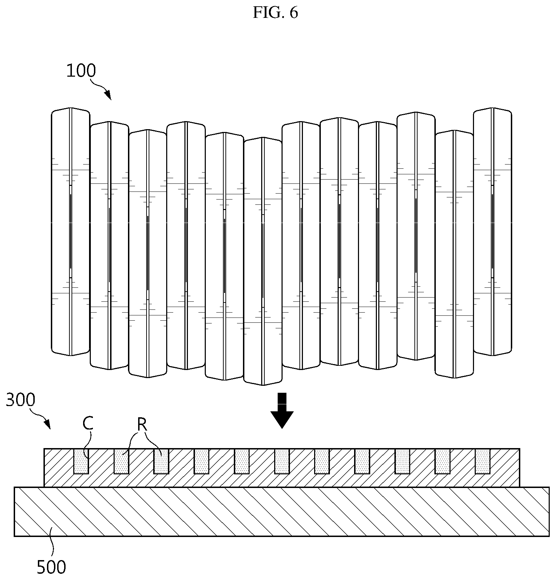

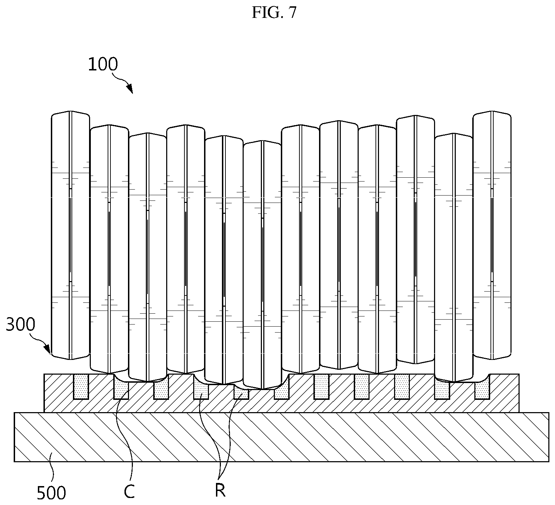

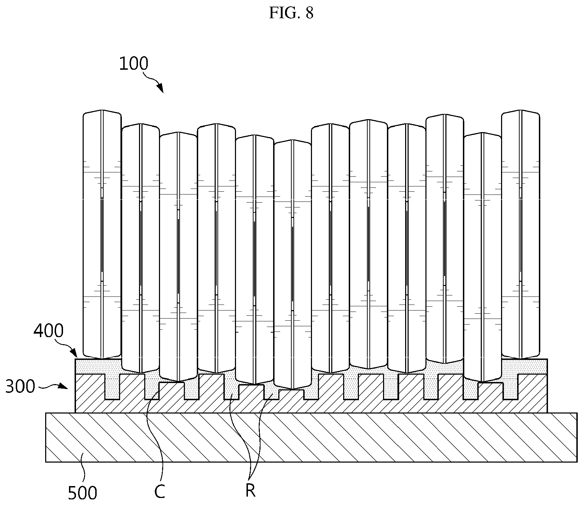

FIG. 6 is a view for describing a state before a battery cell is applied to a heat dissipation pad according to an embodiment of the present disclosure, and FIG. 7 is a view for describing a state in which a battery cell is applied to a heat dissipation pad according to an embodiment of the present disclosure. FIG. 8 is a view for describing a state in which liquid resin flows out after a battery cell is applied to a heat dissipation pad according to an embodiment of the present disclosure.

Referring to FIG. 6, a liquid resin R is injected into the concave portion C provided in the heat dissipation pad 300 according to an embodiment of the present disclosure. A plurality of battery cells 100 is mounted in a direction toward the heat dissipation pad 300 from an upper portion of the heat dissipation pad 300.

Referring to FIG. 7, a plurality of battery cells 100 may be mounted on the heat dissipation pad 300. At this time, the heat dissipation pad 300 may be partially compressed by the load of the plurality of battery cells 100. Alternatively, a plurality of battery cells 100 may be press-fitted and fixed to the heat dissipation pad 300 by a manufacturing process of the battery module 10. That is, the heat dissipation pad 300 may be compressed by the load or additional pressure of the battery cell 100. Specifically, the heat dissipation pad 300 is deformed by pressure due to steps formed on one side of the plurality of battery cells 100 stack to form a space between the plurality of battery cells 100 and the heat dissipation pad 300. The space is temporarily formed and then filled with the liquid resin R later. FIG. 7 is a view for describing a state in which the space is temporarily formed.

For example, the pouch-type battery cell 100 as shown in FIG. 3 may be arranged to be stacked on each other in the width direction (a direction parallel to the X-axis) of the battery cell 100. In this case, some errors between the battery cells 100 may occur in the height direction (a direction parallel to the Z-axis) of the battery cell 100 during the stacking process. For example, as shown in FIGS. 1 and 6, there may be an error in which the battery cells 100 are misaligned with each other in the height direction (a direction parallel to the Z-axis) of the battery cells 100. For example, the error may be about 3 mm or less. When the battery cells 100 are stacked within this range, at least a portion of the battery cells 100 may be in contact with the heat dissipation pad 300 by deformation of the heat dissipation pad 300. Accordingly, the battery module 10 may be smoothly cooled despite some irregular arrangement of the plurality of battery cells 100.

Referring to FIG. 8, the liquid resin R located in the concave portion C flows out into the space formed between the plurality of battery cells 100 and the heat dissipation pad 300. As a result, a liquid resin layer 400 in which the liquid resin R has a predetermined thickness is provided. As the liquid resin layer 400 is provided on top of the heat dissipation pad 300 as described above, one surface of the plurality of battery cells 100 having irregular shapes may be entirely covered by the liquid resin R. Therefore, a contact area between the battery cell 100 and the liquid resin R or between the battery cell 100 and the heat dissipation pad 300 is maximized. Accordingly, cooling efficiency is also maximized. That is, according to the present disclosure, in cooling the battery module 10, the battery module 10 is smoothly cooled despite the irregular shapes of the plurality of battery cells 100 accommodated inside the battery module 10.

In another aspect of the present disclosure, since the liquid resin layer 400 is injected into the concave portion C of the heat dissipation pad 300, its volume may be relatively smaller than that of the heat dissipation pad 300. Therefore, since the amount of the liquid resin R is small, the curing time of the liquid resin layer 400 may be shortened. As a result, the time required for curing is significantly reduced, and thus work efficiency may be improved. Furthermore, handling during the manufacturing operation of the battery module 10 may be facilitated.

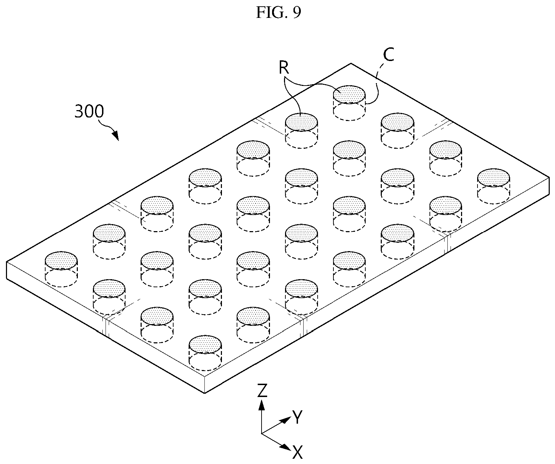

FIG. 5 is a view for describing a heat dissipation pad into which liquid resin is injected according to an embodiment of the present disclosure, and FIG. 9 is a view for describing a heat dissipation pad according to another embodiment of the present disclosure.

Referring to FIGS. 5 and 9, the concave portion C may have a perforated hole shape. However, the shape of the concave portion C is not limited to a circular shape, and it is for sure that any shape is possible as long as the shape is partially or fully dug from the top of the heat dissipation pad 300.

As shown in FIG. 5, the concave portion C may be partially dug without passing through the heat dissipation pad 300. In another embodiment, as shown in FIG. 9, the concave portion C may pass through the heat dissipation pad 300.

According to the shape in which the concave portion C does not entirely penetrate the heat dissipation pad 300 as shown in FIG. 5, the liquid resin R does not flow down the heat dissipation pad 300 even after the liquid resin R is injected, and thus handling during operation may be facilitated. In addition, since the shape may be maintained to some extent even before curing after injection, the time to proceed to the next process may be shortened.

As another embodiment, according to the shape in which the concave portion C penetrates the heat dissipation pad 300 as shown in FIG. 9, a relatively large amount of the liquid resin R may be injected. In this case, when the heat dissipation pad 300 is compressed later and the liquid resin R flows out to form the liquid resin layer 400, the entire area exposed by the step of the battery cell 100 stack may be covered even if the step error of the battery cell 100 stack is relatively large.

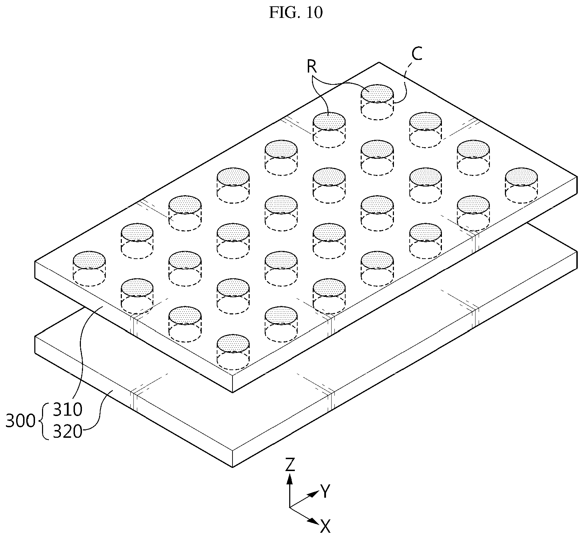

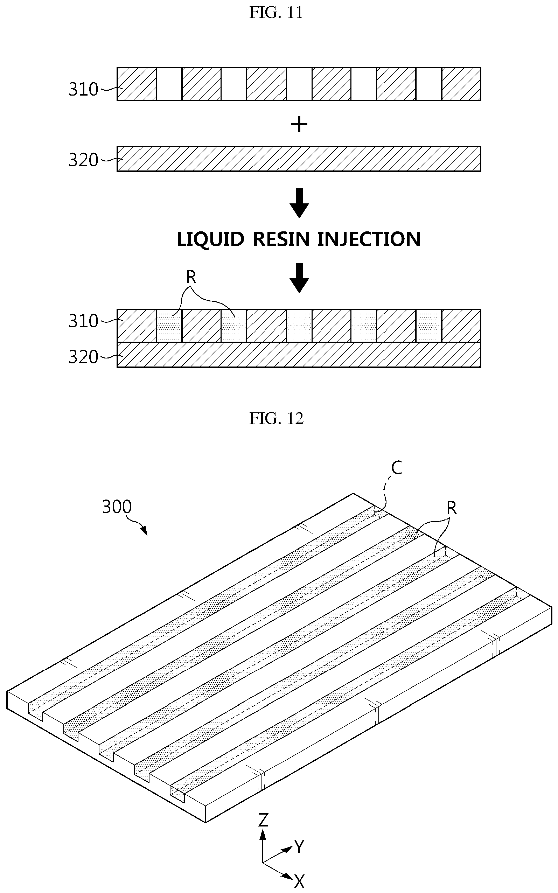

FIG. 10 is a view for describing a heat dissipation pad according to still another embodiment of the present disclosure, and FIG. 11 is a view for describing a manufacturing process of the heat dissipation pad of FIG. 10.

Referring to FIGS. 10 and 11, the heat dissipation pad 300 may include a first pad 310 in direct contact with the plurality of battery cells 100, and a second pad 320 located on the opposite side of the plurality of battery cells 100 based on the first pad 310 and in contact with the first pad 310. That is, the heat dissipation pad 300 may be formed by coupling the first pad 310 and the second pad 320.

In an embodiment of the present disclosure, the concave portion C may be provided only on the first pad 310. For example, referring to FIG. 11, at least one concave portion C may be provided on the first pad 310, and the concave portion C may not be provided on the second pad 320. The concave portion C provided on the first pad 310 may penetrate the first pad 310 or may be partially dug without penetrating the first pad 310. The first pad 310 and the second pad 320 may be vertically coupled. Thereafter, the liquid resin R may be injected into the concave portion C provided on the first pad 310. According to the heat dissipation pad 300 of this type, the liquid resin R does not flow down under the heat dissipation pad 300 due to the second pad even after the liquid resin R is injected, and thus handling during operation may be facilitated. In addition, since the overall shape may be maintained by the second pad 320 even before curing after injection, the time to proceed to the next process may be shortened.

In another aspect of the present disclosure, the elasticity of the first pad 310 may be greater than that of the second pad 320. That is, the hardness of the first pad 310 may be lower than that of the second pad 320. According to this structure, since the first pad 310 in direct contact with the battery cell 100 has a greater elasticity and a lower hardness, the first pad 310 may be easily deformed corresponding to the step of the battery cell 100 stack. At the same time, since the second pad 320 has a smaller elasticity and a higher hardness, the second pad 320 may firmly support the battery cell 100.

As another embodiment of the present disclosure, the first pad 310 and the second pad 320 may be made of the same material. Therefore, in this case, the first pad 310 and the second pad 320 may have the same elasticity and/or hardness.

FIG. 12 is a view for describing a heat dissipation pad according to still another embodiment of the present disclosure.

Referring to FIG. 12, the concave portion C may have a groove shape extending in a straight line. When the concave portion C has a groove shape extending in a straight line in this way, the side surface of the pouch-type battery cell 100 extending in the longitudinal direction may be easily covered even if a step of the battery cell 100 stack occurs.

Referring to FIG. 3 again, the battery cell 100 may include an electrode assembly 110, an accommodating portion 130 accommodating the electrode assembly 110, a sealing portion 150 formed around the accommodating portion 130, and a pair of electrode leads 170 connected to the electrode assembly 110 and drawn out of the sealing portion 150. The pair of electrode leads 170 may be coupled to electrode tabs (not shown) provided in the electrode assembly 110 and may be drawn out of the sealing portion 150 through the sealing portion 150. The pair of electrode leads 170 may have a shape extending along the longitudinal direction of the battery cell 100. The pair of electrode leads 170 may be drawn out in the same direction or in opposite directions.

In one aspect of the present disclosure, the liquid resin R may be a curable liquid resin R that hardens over time. For example, referring to FIG. 8, the liquid resin R flowing out of the concave portion C of the heat dissipation pad 300 may form a liquid resin layer 400 having a predetermined thickness and then harden. That is, the liquid resin R may harden while covering all exposed regions of the battery cells 100 generated by the step of the battery cell 100 stack. Accordingly, the plurality of battery cells 100 may be stably fixed by the cured liquid resin layer 400. The curable liquid resin R may be, for example, a one-component liquid resin R or a two-component liquid resin R. The one-component liquid resin R means a liquid resin R that hardens over time without a separate curing agent. The two-component liquid resin R means a liquid resin R that hardens by adding a separate curing agent. The curing method may be, for example, UV curing, moisture curing, or the like, but the curing method is not limited thereto.

Since the curable liquid resin R is in a liquid state before curing, it may harden in a state in which the contact area between the battery cell 100 and the liquid resin R is maximized. Since the liquid resin R has a heat dissipation function, cooling efficiency may be maximized according to such a structure. That is, according to the present disclosure, in cooling the battery module 10, the battery module 10 may be smoothly cooled despite the irregular shapes of the plurality of battery cells 100 accommodated inside the battery module 10.

The liquid resin R may include, for example, a urethane-based and/or silicon-based material. When including such a material, the liquid resin R may efficiently transfer heat generated from the battery cell 100 to the outside. At the same time, the liquid resin R may effectively fix the battery cell 100 in place in the module housing 200.

In another aspect of the present disclosure, the liquid resin R may be provided not only in the concave portion C of the heat dissipation pad 300, but also in other region inside the module housing 200. For example, the liquid resin R may fill an empty space in the module housing 200. According to this structure, the position of the battery cell 100 in the module housing 200 is fixed more definitely, so that the stability of the battery module 10 may be improved.

In another aspect of the present disclosure, the heat dissipation pad 300 into which the liquid resin R is injected may be provided not only on the bottom of the battery cell 100 but also on the top and/or side. For example, when the heat dissipation pad 300 is provided on the top of the battery cell 100, the plurality of battery cells 100 may be fixed on the heat dissipation pad 300 to harden the liquid resin R, and then the fixed battery cell 100 and the heat dissipation pad 300 may be turned upside down so that the heat dissipation pad 300 may be finally provided on the top of the battery cell 100. This is because if the heat dissipation pad 300 is directly mounted on the top of the battery cell 100, the liquid resin R may flow toward the battery cell 100 by gravity before the liquid resin R hardens.

Referring to FIGS. 6 to 8 again, the battery module 10 may further include a heat sink 500 included inside the module housing 200 and dissipating heat generated in the battery cell 100 to the outside.

For example, the module housing 200 may include a lower frame 210 disposed under the plurality of battery cells; a side frame 230 disposed on a side of the plurality of battery cells; and an upper frame 250 covering upper portions of the plurality of battery cells. Here, the heat sink 500 may be provided on the lower frame 210 of the module housing 200.

For example, referring to FIG. 8, the heat dissipation pad 300 may be interposed between the plurality of battery cells 100 and the heat sink 500. That is, the heat sink 500 may be disposed under the heat dissipation pad 300 disposed at the lower portion of the battery module 10. Therefore, heat transferred from the battery cell 100 to the heat dissipation pad 300 may be transferred to the heat sink 500 again. Furthermore, the heat sink 500 may transfer the heat transferred from the heat dissipation pad 300 to separate cooling water or air. According to the structure in which the battery module 10 additionally includes the heat sink 500 as described above, the heat dissipation effect of the battery module 10 may be further enhanced.

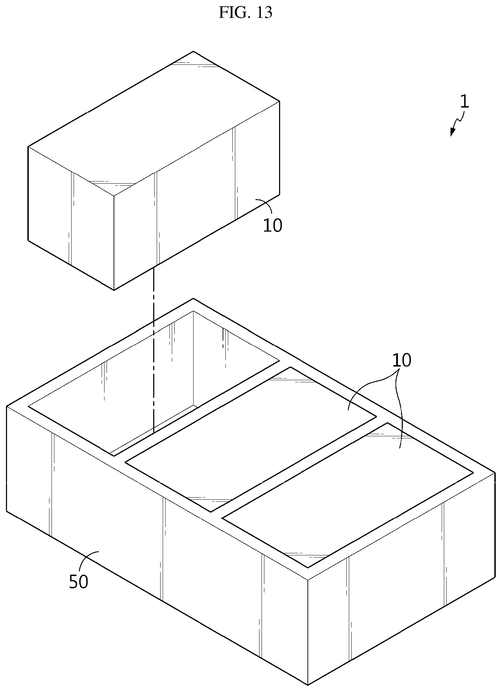

FIG. 13 is a view for describing a battery pack including the battery module of FIG. 1.

Referring to FIG. 13, a battery pack 1 according to the present disclosure may include at least one battery module 10 according to the present disclosure described above. In addition, the battery pack 1 according to the present disclosure may include a pack case 50 capable of accommodating one or more battery modules 10. Also, the battery pack 1 may further include, in addition to the battery module 10, other various components, for example, components of the battery pack 1 known at the time of filing of the present disclosure, such as a BMS, a pack case, a relay, a current sensor, and the like.

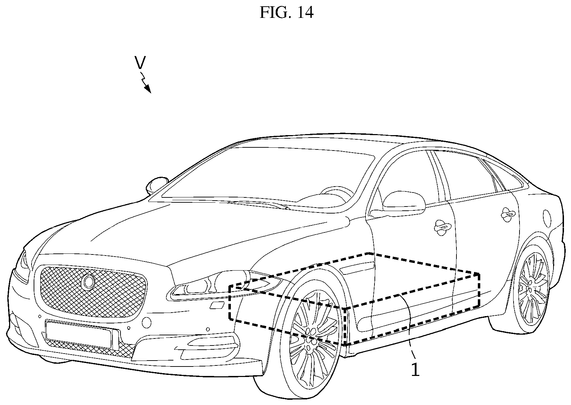

FIG. 14 is a view for describing a vehicle including the battery pack of FIG. 13.

Referring to FIG. 14, a vehicle V according to the present disclosure may include at least one battery pack 1 according to the present disclosure.

According to various embodiments as described above, in cooling the battery module 10, the battery module 10 may be smoothly cooled despite the irregular shapes of the plurality of battery cells 100 accommodated inside the battery module 10. In addition, since the amount of the liquid resin R applied to the present disclosure may be maintained relatively small, the time required for curing may be significantly shortened, and thus work efficiency may be improved. Furthermore, handling during the manufacturing operation of the battery module 10 may be facilitated.

Therefore, according to various embodiments as described above, there may be provided the battery module 10 having improved cooling and fixing performance, and the battery pack 1 and the vehicle V including the same.

Meanwhile, the terms indicating directions as used herein such as up and down are used for convenience of description only, and it is obvious to those skilled in the art that the term may change depending on the position of the stated element or an observer.

### [Reference Signs]

V: vehicle
1: battery pack
10: battery module
50: pack case
100: battery cell
110: electrode assembly
130: accommodating portion
150: sealing portion
170: electrode lead
200: module housing
210: lower frame
230: side frame
250: upper frame
300: heat dissipation pad
C: concave portion
R: liquid resin
310: first pad
320: second pad
400: liquid resin layer
500: heat sink

## Claims

1. A method for manufacturing a battery module (10) comprising:
a plurality of battery cells (100);
a module housing (200) accommodating the plurality of battery cells (100); and
a heat dissipation pad (300):
accommodated in the module housing (200),
located on at least one side of the plurality of battery cells (100), and
provided with at least one concave portion (C); and
a liquid resin layer (400) between the plurality of battery cells (100) and the heat dissipation pad (300),
the method comprising the following steps:
a) Injecting a liquid resin (R) into the at least one concave portion (C),
b) Mounting the plurality of battery cells (100) in a direction toward the heat dissipation pad (300) from an upper portion of the heat dissipation pad (300) thereby deforming the heat dissipation pad (300) by pressure due to steps formed on one side of the plurality of battery cells (100) and forming a space between the plurality of battery cells (100) and the heat dissipation pad (300), and then
c) Filling this space with the liquid resin (R) located in and flowing out of the at least one concave portion (C) to form the liquid resin layer (400).

2. The method according to claim 1,
wherein the heat dissipation pad has an elasticity.

3. The method according to claim 1,
wherein the Shore 00 hardness of the heat dissipation pad (300) is in the range of 50 to 90 HS.

4. The method according to claim 1,
wherein the liquid resin layer (400) is configured such that the liquid resin (R) has a predetermined thickness.

5. The method according to claim 1,
wherein the concave portion (C) has a perforated hole shape.

6. The method according to claim 1,
wherein the concave portion (C) has a groove shape extending in a straight line.

7. The method according to claim 2,
wherein the heat dissipation pad (300) comprises:
a first pad (310) in direct contact with the plurality of battery cells (100); and
a second pad (320) located on the opposite side of the plurality of battery cells (100) based on the first pad (310) and in contact with the first pad (310).

8. The method according to claim 7,
wherein the elasticity of the first pad (310) is greater than that of the second pad (320).

9. The method according to claim 7,
wherein the concave portion (C) is provided only on the first pad (310).

10. The method according to claim 1,
wherein the liquid resin (R) is a curable liquid resin that hardens over time.

11. The method according to claim 1,
which further comprises a heat sink (500) comprised inside the module housing (200) and dissipating heat generated in the battery cell to the outside.

12. The method according to claim 11,
wherein the heat dissipation pad (300) is interposed between the plurality of battery cells (100) and the heat sink (500).

## Patentansprüche

1. Verfahren zur Herstellung eines Batteriemoduls (10), umfassend:
eine Vielzahl von Batteriezellen (100);
ein Modulgehäuse (200), das die Vielzahl von Batteriezellen (100) aufnimmt; und
ein Wärmeableitungspad (300):
das in dem Modulgehäuse (200) aufgenommen ist,
das sich auf mindestens einer Seite der Vielzahl von Batteriezellen (100) befindet, und
das mit mindestens einem konkaven Abschnitt (C) versehen ist; und
eine Flüssigharzschicht (400) zwischen der Vielzahl von Batteriezellen (100) und dem Wärmeableitungspad (300),
wobei das Verfahren die folgenden Schritte umfasst:
a) Einspritzen eines flüssigen Harzes (R) in den mindestens einen konkaven Abschnitt (C),
b) Montieren der Vielzahl von Batteriezellen (100) in einer Richtung hin zu dem Wärmeableitungspad (300) von einem oberen Abschnitt des Wärmeableitungspads (300) aus, wodurch das Wärmeableitungspad (300) durch Druck aufgrund von Stufen, die auf einer Seite der Vielzahl von Batteriezellen (100) ausgebildet sind, verformt wird und ein Raum zwischen der Vielzahl von Batteriezellen (100) und dem Wärmeableitungspad (300) gebildet wird, und dann
c) Füllen dieses Raums mit dem flüssigen Harz (R), das sich in dem mindestens einen konkaven Abschnitt (C) befindet und aus diesem herausfließt, um die Flüssigharzschicht (400) zu bilden.

2. Verfahren nach Anspruch 1, wobei das Wärmeableitungspad eine Elastizität aufweist.

3. Verfahren nach Anspruch 1, wobei die Shore-00-Härte des Wärmeableitungspads (300) im Bereich von 50 bis 90 HS liegt.

4. Verfahren nach Anspruch 1, wobei die Flüssigharzschicht (400) derart konfiguriert ist, dass das flüssige Harz (R) eine vorbestimmte Dicke aufweist.

5. Verfahren nach Anspruch 1, wobei der konkave Abschnitt (C) eine perforierte Lochform aufweist.

6. Verfahren nach Anspruch 1, wobei der konkave Abschnitt (C) eine sich in einer geraden Linie erstreckende Nutenform aufweist.

7. Verfahren nach Anspruch 2, wobei das Wärmeableitungspad (300) Folgendes umfasst:
ein erstes Pad (310) in direktem Kontakt mit der Vielzahl von Batteriezellen (100); und
ein zweites Pad (320), das sich auf der dem ersten Pad (310) entgegengesetzten Seite der Vielzahl von Batteriezellen (100) befindet und mit dem ersten Pad (310) in Kontakt steht.

8. Verfahren nach Anspruch 7, wobei die Elastizität des ersten Pads (310) größer ist als die des zweiten Pads (320).

9. Verfahren nach Anspruch 7, wobei der konkave Abschnitt (C) nur auf dem ersten Pad (310) vorgesehen ist.

10. Verfahren nach Anspruch 1, wobei das flüssige Harz (R) ein härtbares flüssiges Harz ist, das im Laufe der Zeit aushärtet.

11. Verfahren nach Anspruch 1, welches ferner einen Kühlkörper (500) umfasst, der im Inneren des Modulgehäuses (200) enthalten ist und in der Batteriezelle erzeugte Wärme nach außen ableitet.

12. Verfahren nach Anspruch 11, wobei das Wärmeableitungspad (300) zwischen der Vielzahl von Batteriezellen (100) und dem Kühlkörper (500) eingefügt ist.

## Revendications

1. Procédé de fabrication d'un module de batterie (10) comprenant :
une pluralité de cellules de batterie (100) ;
un boîtier de module (200) logeant la pluralité de cellules de batterie (100) ; et
un tampon de dissipation thermique (300) :
logé dans le boîtier de module (200),
situé sur au moins un côté de la pluralité de cellules de batterie (100), et
pourvu d'au moins une portion concave (C) ; et
une couche de résine liquide (400) entre la pluralité de cellules de batterie (100) et le tampon de dissipation thermique (300),
le procédé comprenant les étapes suivantes :
a) injecter une résine liquide (R) dans l'au moins une portion concave (C),
b) monter la pluralité de cellules de batterie (100) dans une direction vers le tampon de dissipation thermique (300) depuis une portion supérieure du tampon de dissipation thermique (300), déformant ainsi le tampon de dissipation thermique (300) par pression en raison de marches formées sur un côté de la pluralité de cellules de batterie (100) et formant un espace entre la pluralité de cellules de batterie (100) et le tampon de dissipation thermique (300), puis
c) remplir cet espace avec la résine liquide (R) située dans l'au moins une portion concave (C) et s'en écoulant pour former la couche de résine liquide (400).

2. Procédé selon la revendication 1, dans lequel le tampon de dissipation thermique présente une élasticité.

3. Procédé selon la revendication 1, dans lequel la dureté Shore 00 du tampon de dissipation thermique (300) se situe dans la plage allant de 50 à 90 HS.

4. Procédé selon la revendication 1, dans lequel la couche de résine liquide (400) est configurée de telle sorte que la résine liquide (R) présente une épaisseur prédéterminée.

5. Procédé selon la revendication 1, dans lequel la portion concave (C) présente une forme de trou perforé.

6. Procédé selon la revendication 1, dans lequel la portion concave (C) présente une forme de rainure s'étendant en ligne droite.

7. Procédé selon la revendication 2, dans lequel le tampon de dissipation thermique (300) comprend :
un premier tampon (310) en contact direct avec la pluralité de cellules de batterie (100) ; et
un second tampon (320) situé sur le côté opposé de la pluralité de cellules de batterie (100) par rapport au premier tampon (310) et en contact avec le premier tampon (310).

8. Procédé selon la revendication 7, dans lequel l'élasticité du premier tampon (310) est supérieure à celle du second tampon (320).

9. Procédé selon la revendication 7, dans lequel la portion concave (C) n'est prévue que sur le premier tampon (310).

10. Procédé selon la revendication 1, dans lequel la résine liquide (R) est une résine liquide durcissable qui durcit avec le temps.

11. Procédé selon la revendication 1, qui comprend en outre un dissipateur thermique (500) compris à l'intérieur du boîtier de module (200) et dissipant vers l'extérieur la chaleur générée dans la cellule de batterie.

12. Procédé selon la revendication 11, dans lequel le tampon de dissipation thermique (300) est interposé entre la pluralité de cellules de batterie (100) et le dissipateur thermique (500).
